# EUROPEAN PATENT SPECIFICATION

(11) **EP 1 669 468 B1**
(45) Date of publication and mention of the grant of the patent: **20.04.2011**
(21) Application number: 04747933.2
(22) Date of filing: 16.07.2004
(51) Int. Cl.: C22C 38/00, C21D 8/00, C21D 9/28

(54) **STEEL PRODUCT FOR INDUCTION HARDENING, INDUCTION-HARDENED MEMBER USING THE SAME, AND METHODS FOR PRODUCING THEM**
STAHLPRODUKT FÜR DAS INDUKTIONSHÄRTEN, INDUKTIONSGEHÄRTETES BAUELEMENT, BEI DEM DIESES VERWENDET WIRD, UND HERSTELLUNGSVERFAHREN DAFÜR
PRODUIT EN ACIER POUR TREMPE PAR INDUCTION, ELEMENT TREMPE PAR INDUCTION L'UTILISANT ET PROCEDES DE PRODUCTION CORRESPONDANT

(30) Priority: 29.09.2003 JP 2003338634; 18.06.2004 JP 2004181467
(43) Date of publication of application: 14.06.2006
(73) Proprietor: JFE Steel Corporation, Tokyo, 100-0011 (JP)
(72) Inventor: MATSUZAKI, Akihiro, Intellectual Property Dept., Chiyoda-ku, Tokyo 100-0011 (JP); OMORI, Yasuhiro, c/o Intellectual Property Dept., Chiyoda-ku, Tokyo 100-0011 (JP); KUROSAWA, Nobutaka, Intellectual Property Dept., Chiyoda-ku, Tokyo 100-0011 (JP); HAYASHI, Tohru, c/o Intellectual Property Dept., Chiyoda-ku, Tokyo 100-0011 (JP); TOYOOKA, TakaakI, c/o Intellectual Property Dept., Chiyoda-ku, Tokyo 100-0011 (JP); YAMADA, Katsumi, c/o Intellectual Property Dept., Chiyoda-ku, Tokyo 100-0011 (JP)
(74) Representative: HOFFMANN EITLE
(86) International application number: PCT/JP2004/010570
(87) International publication number: WO 2005/031020

(56) References cited:
- EP-A1- 0 487 250
- EP-A1- 1 243 664
- JP-A- 5 017 821
- JP-A- 5 017 821
- JP-A- 7 118 791
- JP-A- 8 053 714
- JP-A- 8 283 910
- JP-A- 10 219 392
- JP-A- 11 236 644
- US-A- 5 279 688

## Description

### Technical Field

The present invention relates to a steel material for induction quenching, which is suitable for an automobile drive shaft, constant velocity joint, and the like having a hard layer on a surface thereof formed by induction quenching, a induction quenched member using the same, and manufacturing methods thereof.

### Background Art

Heretofore, as for machine structural members, such as an automobile drive shaft, constant velocity joint, crank shaft, input shaft, output shaft, gear, and hub, after a hot-rolled steel bar is subjected to hot forging, followed by cutting, cold forging, and the like to have a predetermined shape, in general, a fatigue strength is imparted to the steel thus treated by induction quenching and tempering, the fatigue strength, such as torsional fatigue strength, bending fatigue strength, rolling contact fatigue strength, and sliding and rolling contact fatigue strength, being important properties for machine structural members.

In recent years, concomitant with growing demand for reduction in weight of automobile members due to environmental issues, further improvement in fatigue strength of the machine structural members as described above has been increasingly required.

In order to improve the fatigue strength, for example, the increase in quenching depth by induction quenching may be considered. However, the fatigue strength becomes saturated at a certain quenching depth and cannot be further improved.

In addition, for improvement in fatigue strength, the improvement in grain boundary strength is also effective, and for example, in Japanese Unexamined Patent Application Publication No. 2000-154819, a technique has been proposed in which austenite grains are particularized by precipitating a large amount of fine TiC in heating of induction quenching. However, according to this technique, although the grain boundary strength can be improved to a certain extent, the recent requirement for the fatigue strength cannot be fully satisfied.

In Japanese Unexamined Patent Application Publication No. 8-53714, a machine structural member having an improved fatigue strength has been proposed in which the fatigue strength is improved by controlling the following properties within respective predetermined ranges in accordance with the amount of C while a ratio CD/R is limited in the range of 0.3 to 0.7, CD being the thickness (depth of quenching) of a hard layer formed by induction quenching of a machine structural member having a circular transverse section, R being the radius thereof. The properties mentioned above are the above CD/R, grain diameter of prior austenite in a region from the surface to 1 mm depth after induction quenching, average Vickers hardness Hf up to a ratio CD/R of 0.1 as obtained by induction quenching, and value A obtained from average Vickers hardness Hc of an axial central portion after induction quenching. However, by the member described above, as is the case described above, the recent requirement for the fatigue strength cannot be fully satisfied.

In addition, as described above, in general, the machine structural members such as an automobile drive shaft and constant velocity joint are machined by cutting into a predetermined shape before induction quenching in many cases. Hence, a steel material used for the members as described above is required to have superior machinability. However, in Japanese Unexamined Patent Application Publication Nos. 2000-154819 and 8-53714, the machinability has not been taken into consideration at all. In practice, when the steel disclosed in the publications described above is machined, the life of cutting tool is shortened, and hence the machinability has been a problem.

JP-A-05-017821 discloses a billet of a medium carbon steel having a composition which contains, by weight, 0.4-0.8% C, 0.25-0.70% Mn, 0.01-0.15% S, 0.015-0.05% Al, 0.003-0.020% N, and further 0.3-1.5% Cr and/or 0.05-0.5% Mo or further contains one or ≥2 kinds among 0.005-0.04% Ti, 0.005-0.1% Nb, and 0.03-0.3% V and in which the contents of Si, P, B, and O as impurities are limited to <0.1%, <0.020%, <0.0005%, and <0.002%, respectively, is heated within a temperature rise time of ≥30min up to forging temperature, forged into the desired shape in a temperature region not higher than 1000°C, and cooled through the temperature region between the forging temperature and 500°C at ≥0.5°C/sec average cooling rate. Finally, hardening and tempering are done by using a high frequency current of 30kHz frequency. This provides a forged part having a torsional strength of ≥180kgf/mm².

JP-A-07-118791 discloses a steel stock having a composition consisting of, by weight, 0.35-0.75% C, 0.05-1.0% Si, 0.3-2.0% Mn, 0.015-0.05% Al, ≤0.03% S, ≤0.015% P, and a balance essentially of Fe. After forging this stock, induction hardening is done at a frequency of 200kHz to obtain >0.5mm hardening depth, and then, hardening is done again at a frequency of 200kHz or less at a maximum ultimate temperature between Ac, and (Ac₃+150K) to a hardening depth shallower than that at the time of the first stage hardening, by which carbides are finely dispersed at ≥10 surfaceγ-grain size. By this method, the parts for machine structural use, having high plane fatigue strength, can be obtained.

### Disclosure of Invention

An object of the present invention is to provide a steel material for induction quenching, which has superior machinability and which can obtain a high fatigue strength by induction quenching as compared to that obtained in the past, a induction quenched member using the same, and manufacturing methods thereof.

According to a first aspect, the present invention provides a steel material for induction quenching comprising:
0.3% to 0.7% of C, 1.1% or less of Si, 0.2% to 1.1% of Mn, 0.05% to 0.6% of Mo, 0.06% or less of S, 0.025% or less of P, 0.25% or less of Al, 0.1% to less than 0.3% of Cr on a mass basis;
and optionally comprising at least one of 1.0% or less of Cu, 3.5% or less of Ni, 1.0% or less of Co, 0.1% or less of Nb, 0.1% or less of Ti and 0.5% or less of V on a mass basis;
and optionally further comprising at least one of 0.005% or less of Ca, 0.005% or less of Mg, 0.005% or less of Te, 0.5% or less of Bi, 0.5% or less of Pb and 0.01% or less of Zr on a mass basis;
and the balance being Fe and unavoidable impurities including oxygen, nitrogen and boron, the latter's content being 0.0003% or less by mass, wherein the steel material comprises a ferrite structure whose maximum thickness is 30 µm or less and a pearlite structure, the total volume fraction of the ferrite structure and the pearlite structure being 90% or more.

According to a second aspect, the present invention provides an induction quenched steel obtainable by induction quenching a steel material according to the above first aspect, the induction quenching forming a hard layer having a thickness of 2 mm or more in which the average prior austenite grain diameter is 12 µm or less, the hard layer being that region of the induction quenched steel from its surface, where the steel has a 100% martensite structure on an area fraction basis, to a depth at which the area fraction of the martensite structure is decreased to 98%.

According to a third aspect, the present invention provides a method for manufacturing a steel material for induction quenching comprising the steps of:
hot working steel at a total reduction rate of 80% or more in a temperature region of more than 850°C to 950°C, the steel comprising 0.3% to 0.7% of C, 1.1% or less of Si, 0.2% to 1.1% of Mn, 0.05% to 0.6% of Mo, 0.06% or less of S, 0.025% or less of P, 0.25% or less of Al, 0.1% to less than 0.3% of Cr on a mass basis;
   and optionally comprising at least one of 1.0% or less of Cu, 3.5% or less of Ni, 1.0% or less of Co, 0.1% or less of Nb, 0.1% or less of Ti and 0.5% or less of V on a mass basis;
   and optionally further comprising at least one of 0.005% or less of Ca, 0.005% or less of Mg, 0.005% or less of Te, 0.5% or less of Bi, 0.5% or less of Pb and 0.01% or less of Zr on a mass basis;
   and the balance being Fe and unavoidable impurities including oxygen, nitrogen and boron, the latter's content being 0.0003% or less by mass, and
cooling the steel treated by the hot working to 600°C or less at a cooling rate of less than 0.6°C/sec.

According to a fourth aspect, the present invention provides a method for manufacturing an induction quenched member comprising the steps of:
forming a steel material according to the above first aspect of the present invention into a predetermined shape, and
induction quenching the shaped steel material in a heating temperature region of 800°C to 1,000°C for 5 seconds or less.

### Brief Description of the Drawings

Fig. 1 is a schematic view illustrating the thickness of a ferrite structure.
Fig. 2 is a graph showing the relationship between the heating temperature in induction quenching and the average prior austenite grain diameter of a hard layer.

### Best Mode for Carrying Out the Invention

Through intensive research carried out by the inventors of the present invention on a steel material for induction quenching which has superior machinability and which can obtain high fatigue strength by induction quenching as compared to that obtained in the past, the following knowledge was obtained.
(1) When the chemical composition of a steel material is optimized, the total volume fraction of a ferrite structure and a pearlite structure thereof is controlled to be 90% or more, and the thickness of the ferrite structure is controlled to be 30 µm or less, the machinability can be improved.
(2) When induction quenching is performed for a steel material having the chemical composition and the structure described in the above (1), the average prior austenite grain diameter of a hard layer formed at a surface portion can be decreased to 12 µm or less, and as a result, a high fatigue strength can be obtained.
(3) When induction quenching is performed for a steel material having the chemical composition and the structure described in the above (1) in a heating temperature region of 800°C to 1,000°C for 5 seconds or less, the average prior austenite grain diameter over the entire hard layer can be decreased to 12 µm or less, and as a result, a high fatigue strength can be stably obtained.

The present invention was made based on the above knowledge, and the details thereof will be described below.

### 1. Steel Material for induction Quenching

### 1-1. Components

C: C has the most significant influence on quenching properties, can make harder the hard layer after quenching, and can make the thickness thereof larger, thereby improving the fatigue strength. However, when the content is less than 0.3 percent by mass, the thickness of the hard layer must be considerably increased in order to ensure a required fatigue strength, and as a result, the generation of quench cracking markedly occurs. On the other hand, when the content is more than 0.7 percent by mass, the fatigue strength is decreased due to the decrease in grain boundary strength, and in addition, the machinability, cold forging properties, and quench cracking resistance are also degraded. Hence, the content of C is set in the range of 0.3 to 0.7 percent by mass and preferably 0.4 to 0.6 percent by mass.

Si: Si increases the number of nucleation sites of austenite in heating of quenching and also particularizes the hard layer by suppressing the growth of the austenite grains. In addition, Si suppresses the decrease in grain boundary strength by suppressing the formation of carbides. Hence, Si is an element effective in improving the fatigue strength. However, when the content is more than 1.1 percent by mass, ferrite is solution-hardened, and as a result, the machinability and cold forging properties are degraded. Hence, the content of Si is set to 1.1 percent by mass or less. In addition, in order to improve the fatigue strength, the content of Si is preferably set to 0.3 percent by mass or more. However, since the increase in Si is disadvantageous to the machinability, in order to improve the machinability, the content of Si is preferably set to less than 0.3 percent by mass.

Mn: Mn is an indispensable element for improving the quenching properties and for ensuring the thickness of the hard layer. However, when the content is less than 0.2 percent by mass, the effect is not significant. On the other hand, when the content is more than 2.0 percent by mass, the amount of retained austenite is increased after quenching, the surface hardness is decreased, and as a result, the fatigue strength is decreased. Hence, the content of Mn is set to 0.2 percent by mass or more, preferably 0.3 percent by mass or more, and more preferably in the range of 0.5 to 2.0. percent by mass. In addition, when the content of Mn is high, the hardness of a mother material is increased, and the machinability tends to be disadvantageously degraded; hence, the content is preferably set to 1.2 percent by mass or less and is more preferably set to 1.0 percent by mass or less.

Mo: Mo decreases the austenite grain diameter in heating of quenching and particularizes the quenched hard layer, so that the fatigue strength is improved. In particular, when the heating temperature in quenching is set in the range of 800°C to 1,000°C and more preferably set in the range of 800°C to 950°C, the effect described above becomes more significant. Furthermore, since being effective in improving the quenching properties, Mo is used for the adjustment thereof. In addition, Mo prevents the decrease in grain boundary strength by suppressing the formation of carbides. As described above, Mo is a very important element of the present invention; however, when the content thereof is less than 0.05 percent by mass, the prior austenite grain diameter of the hard layer cannot be easily decreased to 12 µm or less all along the depth of the entire hard layer. On the other hand, when the content is more than 0.6 percent by mass, the machinability is degraded. Hence, the content of Mo is set to 0.05 to 0.6 percent by mass and preferably 0.2 to 0.4 percent by mass.

S: S forms MnS in steel and improves the machinability. However, when the content is more than 0.06 percent by mass, S segregates at the grain boundaries, and as a result, the grain boundary strength is decreased. Hence, the content of S is set to 0.06 percent by mass or less and preferably set in the range of 0.01 to 0.06 percent by mass.

P: P segregates at the austenite grain boundaries, decreases the grain boundary strength, and decreases the fatigue strength, and in addition, quench cracking is promoted. Hence, although the content of P is set to 0.02 percent by mass or less, a smaller P content is more preferable.

A1: A1 is an element effective in deoxidizing steel. In addition, Al suppresses the growth of the austenite grains in heating of quenching, and as a result, the hard layer is particularized. However, when the content is more than 0.25 percent by mass, the effect is saturated, and the manufacturing cost is adversely increased. Hence, the content of Al is set to 0.25 percent by mass or less and is preferably set in the range of 0.01 to 0.05 percent by mass.

Cr: Cr is an element effective for the quenching properties and increases the thickness of the hard layer, thereby improving the fatigue strength. However, when the content is excessive, carbides are stabilized, the growth of residual carbides is promoted, and the grain boundary strength is decreased; hence, as a result, the fatigue strength is decreased. Accordingly, the content of Cr is set to less than 0.3 percent by mass. In addition, in view of the improvement in quenching properties, the content is set to 0.1 percent by mass or more.

The balance, that is, elements other than the elements described above, is Fe and unavoidable impurities. The unavoidable impurities are 0, N, B, and the like; however, even when 0.008 percent by mass or less of 0, 0.02 percent by mass or less of N, and 0.0003 percent by mass or less of B are contained, the effects of the present invention will not be degraded. In particular, when the content of B exceeds 0.0003 percent by mass, (Fe, Mo, Mn)₂₃(C, B)₆ tends to be stabilized and precipitated in steel before induction quenching, and thereby small and large prior austenite grains are mixed and are present in the hard layer after quenching, so that a high fatigue strength cannot be achieved.

Besides the elements described above, when at least one element selected from the group consisting of 1.0% or less of Cu, 3.5% or less of Ni, 1.0% or less of Co, 0.1% or less of Nb, 0.1% or less of Ti, and 0.5% or less of V on a mass basis is contained, it is effective since the fatigue strength is improved by the following reasons.

Cu: Cu is an element effective for the quenching properties. In addition, Cu is dissolved in ferrite and improves the fatigue strength by solid-solution strengthening. Furthermore, Cu suppresses the formation of carbides and prevents the decrease in grain boundary strength, so that the fatigue strength is improved. However, when the content is more than 1.0 percent by mass, cracking is liable to occur in hot working. Hence, the content of Cu is set to 1.0 percent by mass or less and is preferably set in the range of 0.03 to 0.2 percent by mass.

Ni: Since being an element improving the quenching properties, Ni is used for adjustment thereof. In addition, Ni suppresses the formation of carbides, prevents the decrease in grain boundary strength, and improves the fatigue strength. However, since Ni is a very expensive element, when the content thereof is more than 3.5 percent by mass, the manufacturing cost is increased. Hence, the content of Ni is set to 3.5 percent by mass or less. In addition, when the content of Ni is less than 0.05 percent by mass, since the effect of improving the quenching properties and the effect of suppressing the decrease in grain boundary strength are not significant, the content is preferably set to 0.05 percent by mass or more. Furthermore, the content is more preferably set in the range of 0.1 to 1.0 percent by mass.

Co: Co is an element which suppresses the formation of carbides, prevents the decrease in grain boundary strength, and improves the strength and the fatigue strength. However, since Co is a very expensive element, when the content thereof is more than 1.0 percent by mass, the manufacturing cost is increased. Hence, the content of Co is set to 1.0 percent by mass or less. In addition, when the content of Co is less than 0.01 percent by mass, since the effect of suppressing the decrease in grain boundary strength is not significant, the content is preferably set to 0.01 percent by mass or more. Furthermore, the content is more preferably set in the range of 0.02 to 0.5 percent by mass.

Nb: Nb improves the quenching properties, is bonded with C and N to provide precipitation strengthening of steel, and improves the resistance to temper softening, so that the fatigue strength is improved. However, when the content is more than 0.1 percent by mass, the effect thereof is saturated. Hence, the content of Nb is set to 0.1 percent by mass or less. In addition, when the content of Nb is less than 0.005 percent by mass, since the effects of improving the precipitation strengthening and the resistance to temper softening are not significant, the content is preferably set to 0.005 percent by mass or more. Furthermore, the content is more preferably set in the range of 0.01 to 0.05 percent by mass.

Ti: Ti is bonded with C and N to provide precipitation strengthening of steel and improves the resistance to temper softening, so that the fatigue strength is improved. However, when the content is more than 0.1 percent by mass, a large amount of TiN is formed which functions as a point of initiating fatigue failure, and as a result, the fatigue strength is considerably decreased. Hence, the content of Ti is set to 0.1 percent by mass or less. In addition, when the content of Ti is less than 0.01 percent by mass, since the effect of improving the fatigue strength is not significant, the content is preferably set to 0.01 percent by mass or more.

V: V is bonded with C and N to provide precipitation strengthening of steel and improves the resistance to temper softening, so that the fatigue strength is improved. However, when the content is more than 0.5 percent by mass, the effect is saturated. Hence, the content of V is set to 0.5 percent by mass or less. In addition, when the content of V is less than 0.01 percent by mass, since the effect of improving the fatigue strength is not significant, the content is preferably set to 0.01 percent by mass or more. Furthermore, the content is more preferably set in the range of 0.03 to 0.3 percent by mass.

In addition to the basic components described above, or in addition to the above basic components and the component more effective in improving the fatigue strength, when at least one element selected from the group consisting of 0.005% or less of Ca, 0.005% or less of Mg, 0.005% or less of Te, 0.5% or less of Bi, 0.5% or less of Pb, and 0.01% or less of Zr on a mass basis is contained, the machinability is more effectively improved by the following reasons.

Ca: Since forming a sulfide, which functions as a chip breaker, in combination with MnS and thereby improving the machinability, Ca may be added whenever necessary. However, when the content is more than 0.005 percent by mass, the effect is not only saturated but the manufacturing cost is also increased. Hence, the content of Ca is set to 0.005 percent by mass or less. When the content of Ca is less than 0.0001 percent by mass, since the effect of improving the machinability is not significant, the content is preferably set to 0.0001 percent by mass or more.

Mg: Since being not only a deoxidizing element but also concentrating stress so as to improve the machinability, Mg may be added whenever necessary. However, when the content is excessive, the effect is not only saturated but the manufacturing cost is also increased. Hence, the content of Mg is set to 0.005 percent by mass or less. When the content of Mg is less than 0.0001 percent by mass, since the effect of improving the machinability is not significant, the content is preferably set to 0.0001 percent by mass or more.

Te: Since Te is bonded with Mn to form MnTe which functions as a chip breaker, the machinability is improved. However, when the content is more than 0.005 percent by mass, the effect is not only saturated but the manufacturing cost is also increased. Hence, the content of Te is set to 0.005 percent by mass or less. When the content of Te is less than 0.003 percent by mass, since the effect of improving the machinability is not significant, the content is preferably set to 0.003 percent by mass or more.

Bi: Bi has melting, lubricating, and embrittlement functions in cutting, and thereby the machinability is improved. However, when the content is more than 0.5 percent by mass, the effect is not only saturated but the manufacturing cost is also increased. Hence, the content of Bi is set to 0.5 percent by mass or less. When the content of Bi is less than 0.01 percent by mass, since the effect of improving the machinability is not significant, the content is preferably set to 0.01 percent by mass or more.

Pb: Pb has melting, lubricating, and embrittlement functions in cutting, and thereby the machinability is improved. However, when the content is more than 0.5 percent by mass, the effect is not only saturated but the manufacturing cost is also increased. Hence, the content of Pb is set to 0.5 percent by mass or less. When the content of Pb is less than 0.01 percent by mass, since the effect of improving the machinability is not significant, the content is preferably set to 0.01 percent by mass or more.

Zr: Since Zr forms in combination with MnS a sulfide which functions as a chip breaker, the machinability is improved. However, when the content is more than 0.01 percent by mass, the effect is not only saturated but the manufacturing cost is also increased. Hence, the content of Zr is set to 0.01 percent by mass or less. When the content of Zr is less than 0.003 percent by mass, since the effect of improving the machinability is not significant, the content is preferably set to 0.003 percent by mass or more.

### 1-2. Microstructure

For improvement in machinability and fatigue strength after induction quenching, in addition to the necessary components described above, it is also required that the microstructure of steel is composed of a ferrite structure and a pearlite structure, the total volume fraction of the ferrite structure and the pearlite structure is set to 90% or more, and the thickness of the ferrite structure is set to 30 µm or less.

In the case described above, the thickness of the ferrite structure is defined as follows.

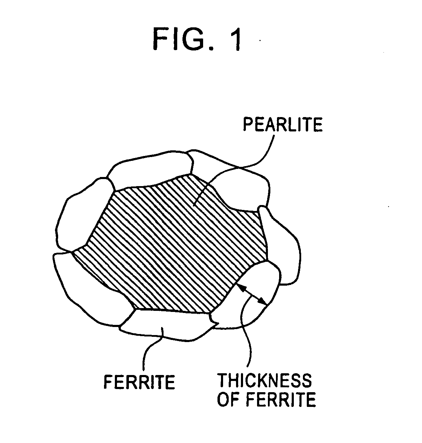

As shown in Fig. 1, the steel material of the present invention has a microstructure composed of a pearlite structure and a ferrite structure in the form of a rosary disposed therearound. The width of the ferrite structure in the direction perpendicular to the circumferential direction thereof is called the thickness of the ferrite structure. For this measurement, the image of an optical microscope was traced.

When the total volume fraction of the ferrite structure and the pearlite structure is less than 90%, and the volume fraction of the bainite structure and that of the martensite structure are increased, the machinability is considerably degraded. In addition, when the width of the ferrite structure exceeds 30 µm since hard phases and soft phases are coarsely dispersed, the number of hard phases which function as a chip breaker in machining is decreased, and as a result, the machinability cannot be sufficiently ensured.

When the width of the ferrite structure is decreased to 30 µm or less, superior machinability can be obtained, and in addition to that, the average prior austenite grain diameter of the hard layer after induction quenching is advantageously decreased to 12 µm or less. The reason for this is that since the nucleation of austenite grains in heating of quenching occurs from the ferrite/pearlite interfaces and cementite interfaces, the number of nucleation sites is increased as the thickness of the ferrite structure is decreased, and that as a result, the size of the generated austenite grains is decreased.

### 2.Induction Quenched Member

In order to manufacture a induction quenched member having a high fatigue strength by induction quenching using a steel material for induction quenching which has the composition and the microstructure described above, the average prior austenite grain diameter of the hard layer formed by induction quenching on the surface of the induction quenched member must be controlled to be 12 µm or less, preferably 10 µm or less, and more preferably 5 µm or less. When the average prior austenite grain diameter of the hard layer is more than 12 µm, a sufficient grain boundary strength cannot be obtained, and as a result, the improvement in fatigue strength cannot be expected.

In this embodiment, the prior austenite grain diameter of the hard layer is measured as described below.

After induction quenching, the topmost layer of the member thus processed has 100% of a martensite structure on an area fraction basis. From the surface toward the inside, a region composed of 100% of a martensite structure is present to a certain depth, and from this certain depth, the area fraction of the martensite structure is rapidly decreased. In the present invention, a region from the surface of the member processed by induction quenching to a depth at which the area fraction of the martensite structure is decreased to 98% is defined as the hard layer.

In addition, as for this hard layer, the average prior austenite grain diameters are measured at depths of one fifth, one half, and four fifths of the thickness of the hard layer from the surface thereof, and when being 12 µm or less at all the depths described above, the average prior austenite grain diameter is regarded as 12 µm or less all along the depth of the hard layer.

For the measurement of the average prior austenite grain diameter, after the cross-section of the hard layer was processed by using an etching solution which was prepared by dissolving 50 g of picric acid into 500 g of water, followed by addition of 11 g of sodium dodecylbenzene sulfonate, 1 g of ferrous chloride, and 1.5 g of oxalic acid, five visual fields of each measurement point were observed at a magnification from 400 (area of one visual field being 0.25 mm × 0.225 mm) to 1,000 (area of one visual field being 0.10 mm × 0.09 mm) using an optical microscope, and the average grain diameter was measured by an image analysis device.

In addition, in the case of the rolling contact fatigue which is present only in a microstructure located very close to the topmost surface, even when the thickness of the hard layer is approximately 1 mm, the effect may be obtained to some extent. However, in the case of the bending fatigue and the torsional fatigue, since it is more preferable as the thickness of the hard layer is increased, the thickness thereof is preferably set to 2 mm or more. In addition, the thickness described above is more preferably 2.5 mm or more and even more preferably 3 mm or more.

### 3. Method for Manufacturing Steel Material for Induction Quenching

When hot working such as rolling or forging at a total reduction rate of 80% or more is performed for steel having the composition in the range defined by the present invention in a temperature region of more than 850°C to 950°C, and the steel processed by the hot working is then cooled to 600°C or less at a cooling rate of less than 0.6°C/s, a steel material for induction quenching according to the present invention is obtained in which a ferrite structure and a pearlite structure are present, and the total volume fraction of the ferrite structure and the pearlite structure is 90% or more, and the thickness of the ferrite structure is 30 µm or less.

When the total reduction rate of the hot working is less than 80%, since recrystallization of austenite will not sufficiently proceed, and the austenite grains are not particularized, ferrite generated therefrom grows, and as a result, the thickness of the ferrite structure surrounding the pearlite structure cannot be decreased to 30 µm or less.

In addition, when the cooling rate after the hot working is set to 0.6°C/s or more, a martensite structure and/or a bainite structure may be generated, and as a result, it becomes difficult to control the total volume fraction of the ferrite structure and the pearlite structure to be 90% or more.

### 4. Method for Manufacturing Induction Quenched Member

After formed into a predetermined shape by cutting or the like, when the above steel material for induction quenching of the present invention is processed by induction quenching in a temperature region of 800 °C to 1,000°C for 5 seconds or less, the prior austenite grain diameter can be decreased to 12 µm or less all along the depth of the entire hard layer, so that a induction quenched member having a high fatigue strength can be obtained.

In this case, when the heating temperature is less than 800°C, since the generation of the austenite grains is not sufficient, the formation of the hard layer becomes insufficient, and as a result, a high fatigue strength cannot be obtained. In addition, when the heating temperature is more than 1,000°C, since the growth of the austenite grains is promoted so as to form coarser and larger grains, the hard layer are formed of coarser and larger grains, resulting in decrease in fatigue strength. The heating temperature is more preferably in the range of 800°C to 950°C.

The influence of the heating temperature in induction quenching is more clearly observed when steel containing Mo is used as is the case of the present invention.

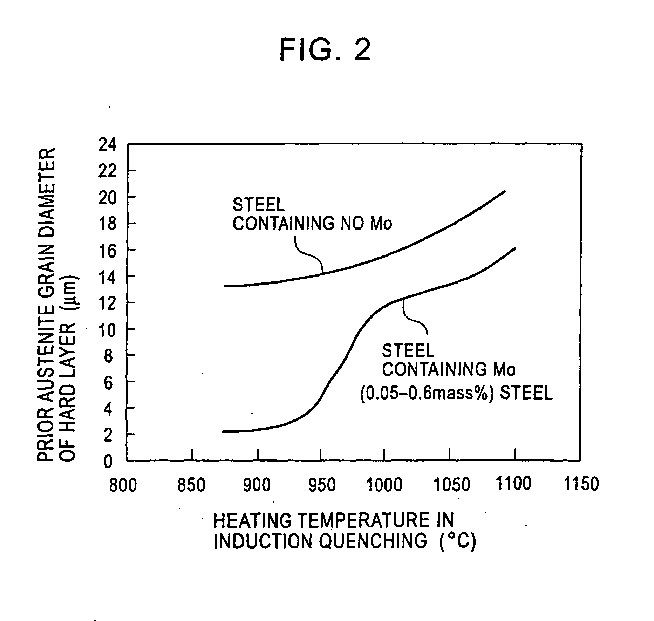

Fig. 2 is a graph showing the relationship between the average prior austenite grain diameter of the hard layer and the heating temperature in induction quenching for steel containing Mo (Mo: 0.05 to 0.6 percent by mass) and steel containing no Mo .

In both cases of the steel containing Mo and the steel containing no Mo, when the heating temperature in induction quenching is decreased, the prior austenite grain diameter of the hard layer is decreased. In particular, in the steel containing Mo, a hard layer formed of significantly fine grains can be obtained at a heating temperature of 1,000°C or less and preferably 950°C or less.

In order to suppress the grain growth of austenite and to obtain a very fine prior austenite grain diameter of 12 µm or less after quenching, the heating time in induction quenching must be set to 5 seconds or less and is preferably set to 3 seconds or less.

In addition, when the heating rate in induction quenching is increased, the grain growth of austenite is likely to be suppressed, and hence the heating rate is preferably set to 200°C/sec or more. Furthermore, the heating rate is more preferably set to 500°C/sec or more.

### Example 1

Steel Nos. 1 to 31 having the compositions shown in Table 1 were each molten in a converter and then formed into a steel sheet having a cross-sectional size of 300 × 400 mm by continuous casting. After the steel sheets were rolled into billets having a size of 150 × 150 mm through a breakdown step, rolling was performed under the hot working conditions shown in Table 2, so that steel bars having a diameter of 24 to 60 mm were formed.

Test pieces having a parallel portion diameter of 8 mm for rotary bending fatigue test were sampled from the above steel bars and were then processed by induction quenching under the conditions shown in Tables 2-1 and 2-2 using a induction quenching device at a frequency of 15 kHz, followed by tempering at 170°C for 30 minutes, so that test pieces of steel materials No. 1 to 43 were obtained. Subsequently, the rotary bending fatigue test was performed for the test pieces thus obtained at an rpm of 3,000 using an Ono's rotary bending fatigue testing machine by changing stress conditions so as to measure a stress at which a life of 1×10⁸ times was obtained, and this stress was defined as the fatigue strength.

Test pieces for machinability evaluation were also sampled from the above steel bars and were then repeatedly drilled at an rpm of 1,500 using an SKH-made drill having a diameter of 4.4 mm to form a hole having a length of 12 mm, and the total hole length (mm) was measured at which the drilling could not be further continued, so that the machinability was evaluated. When the total hole length is larger, the machinability is regarded as superior.

In addition, the microstructure of the steel material before induction quenching, the presence of carbide (Fe, Mo, Mn)₂₃(C, B)₆, and the microstructure after induction quenching were observed using an electron microscope and an optical microscope.

The thickness of the ferrite structure, the thickness of the hard layer, and the average prior austenite grain diameter were measured by the methods described above. In addition, when austenite grains having a grain diameter three times or more the average austenite grain diameter of the hard layer was present at an area fraction of 30% or more, the hard layer was defined as a mixed grain layer.

The results are shown in Figs. 2-1 and 2-2.

All the steel materials according to the present invention have an average prior austenite grain diameter of the hard layer of 12 µm or less after induction quenching and exhibit a superior bending fatigue strength, the above steel materials having the compositions within the range of the present invention and having microstructures each composed of a ferrite structure and a pearlite structure before induction quenching, the total volume fraction of the ferrite structure and the pearlite structure being 90% or more, the thickness of the ferrite structure being 30 µm or less. In addition, the steel materials described above also have superior machinability.

In particular, as it is apparent when steel Nos. 1 and 16, steel Nos. 5 and 20, steel Nos. 6 and 21, steel Nos. 7 and 22, steel Nos. 9 and 24, steel Nos. 10 and 25, and steel Nos. 11 and 26 are compared therebetween, when the content of Si is increased, the average prior austenite grain diameter of the hard layer can be further decreased, and as a result, a higher bending fatigue strength can be obtained. However, when the content of Si is increased, the total hole length is decreased, and hence the machinability is disadvantageously degraded.

For steel materials Nos. 38 to 40, the influence of the heating rate in induction quenching was measured. It is understood that when the heating rate is higher, the bending fatigue strength is increased.

On the other hand, in steel materials No. 2 and 17, which are comparative examples, since the heating temperature in induction quenching is high, the average prior austenite grain diameter of the hard layer becomes coarser and larger, and hence the bending fatigue strength is low.

In addition, in steel materials Nos. 3 and 18, since the holding time in heating of induction quenching is long, the average prior austenite grain diameter becomes coarser and larger, and hence the bending fatigue strength is low.

Since steel materials Nos. 4 and 19 have a small total reduction rate in a temperature region of more than 850°C to 950°C, the thickness of the ferrite structure is increased, and hence the machinability is degraded.

In steel materials Nos. 8, 12, and 27, since the content of Mo is small, the average prior austenite grain diameter becomes coarser and larger, and hence the bending fatigue strength is low.

In steel materials Nos. 13 and 28, since the content of Mo is excessively large, the machinability thereof is inferior.

In steel materials Nos. 14 and 29, since the content of C is small, the bending fatigue strength is low, and on the other hand, in steel materials Nos. 15 and 30, since the content of C is excessively large, the machinability thereof is inferior.

In steel materials Nos. 34 and 35 containing B, which are comparative examples, the total volume fraction of the ferrite structure and the pearlite structure before induction quenching is decreased due to the addition of B, and hence the machinability is inferior. In addition, although the prior austenite grain diameter of the hard layer of the above steel materials is equivalent to that of steel materials Nos. 36 and 37 containing no B, the hard layer is a mixed grain layer, and the fatigue strength is low as compared to that of the above steel materials Nos. 36 and 37. The reason for this is considered that in the steel containing B, since (Fe, Mo, Mn)₂₃(C, B)₆ is stably precipitated before induction quenching, reverse transformation in heating of induction quenching occurs non-uniformly, the hard layer is formed of a mixed grain layer, and as a result, the fatigue strength is decreased.

In steel materials Nos. 41 and 42, since the heating temperature in induction quenching is too high, the average prior austenite grain diameter becomes coarser and larger, and hence the bending fatigue strength is low.

**Table 1**

| Steel No. | Composition (percent by mass) | | | | | | | | | | | | | | | | Remarks |
|---|---|---|---|---|---|---|---|---|---|---|---|---|---|---|---|---|---|
| | C | Si | Mn | P | S | Al | Cr | Mo | Cu | Ni | Co | Nb | Ti | V | B | Others | |
| 1 | 0.52 | 0.52 | 0.75 | 0.015 | 0.020 | 0.06 | 0.14 | 0.42 | - | - | - | - | - | - | - | | Inventive Steel |
| 2 | 0.38 | 0.54 | 0.75 | 0.014 | 0.021 | 0.07 | 0.13 | 0.33 | - | 0.15 | - | - | - | - | - | | Inventive Steel |
| 3 | 0.48 | 0.55 | 0.75 | 0.014 | 0.021 | 0.06 | 0.13 | 0.31 | - | - | - | 0.025 | - | 0.15 | - | | Inventive Steel |
| 4 | 0.48 | 0.53 | 0.55 | 0.013 | 0.019 | 0.06 | 0.12 | 0.42 | 0.20 | - | - | 0.031 | - | - | - | BI:0.12,Pb:015,Zr:0.002 | Inventive Steel |
| 5 | 0.51 | 0.22 | 0.75 | 0.014 | 0.020 | 0.07 | 0.15 | 0.04 | - | - | - | - | - | - | - | | Comparative Steel |
| 6 | 0.48 | 0.61 | 0.77 | 0.013 | 0.020 | 0.06 | 0.14 | 0.27 | - | - | 0.20 | - | 0.021 | - | - | | Inventive Steel |
| 7 | 0.35 | 0.75 | 0.78 | 0.015 | 0.019 | 0.06 | 0.16 | 0.35 | - | - | - | - | - | - | - | Ca:0.002, Mg:0.0020 | Inventive Steel |
| 8 | 0.55 | 0.65 | 0.80 | 0.012 | 0.020 | 0.07 | 0.14 | 0.33 | 0.25 | - | - | - | - | - | - | Te:0.0018 | Inventive Steel |
| 9 | 0.47 | 0.54 | 0.78 | 0.014 | 0.021 | 0.07 | 0.15 | - | - | 0.02 | - | - | - | - | - | | Comparative Steel |
| 10 | 0.42 | 0.53 | 0.77 | 0.013 | 0.020 | 0.07 | 0.15 | 0.80 | - | 0.02 | - | - | - | - | - | | Comparative Steel |
| 11 | 0.20 | 0.51 | 0.80 | 0.014 | 0.018 | 0.06 | 0.15 | 0.36 | - | - | - | - | - | - | - | | Comparative Steel |
| 12 | 0.95 | 0.55 | 0.75 | 0.015 | 0.019 | 0.07 | 0.16 | 0.34 | - | - | - | - | - | - | - | | Comparative Steel |
| 13 | 0.52 | 0.25 | 0.75 | 0.010 | 0.020 | 0.06 | 0.14 | 0.42 | - | - | - | - | - | - | - | | Inventive Steel |
| 14 | 0.38 | 0.18 | 0.75 | 0.010 | 0.021 | 0.07 | 0.13 | 0.33 | - | 0.15 | - | - | - | - | - | | Inventive Steel |
| 15 | 0.48 | 0.15 | 0.75 | 0.010 | 0.021 | 0.06 | 0.13 | 0.31 | - | - | - | 0.025 | - | 0.15 | - | | Inventive Steel |
| 16 | 0.48 | 0.22 | 0.55 | 0.010 | 0.019 | 0.06 | 0.12 | 0.42 | 0.20 | - | - | 0.031 | - | - | - | Bi:0.12,Pb:0.15,Zr:0.002 | Inventive Steel |
| 17 | 0.51 | 0.05 | 0.75 | 0.010 | 0.020 | 0.07 | 0.15 | 0.25 | - | - | - | - | - | - | - | | Inventive Steel |
| 18 | 0.48 | 0.22 | 0.77 | 0.010 | 0.020 | 0.06 | 0.22 | 0.27 | - | - | 0.20 | - | 0.021 | - | - | | Inventive Steel |
| 19 | 0.35 | 0.24 | 0.78 | 0.010 | 0.019 | 0.06 | 0.16 | 0.35 | - | - | - | - | - | - | - | Ca:0.002, Mg:0.0020 | Inventive Steel |
| 20 | 0.55 | 0.15 | 0.80 | 0.010 | 0.020 | 0.07 | 0.14 | 0.33 | 0.25 | - | - | - | - | - | - | Te:0.0018 | Inventive Steel |
| 21 | 0.47 | 0.20 | 0.78 | 0.010 | 0.021 | 0.07 | 0.15 | - | - | 0.20 | - | - | - | - | - | | Comparative Steel |
| 22 | 0.42 | 0.31 | 0.77 | 0.010 | 0.020 | 0.07 | 0.15 | 0.80 | - | - | - | 0.015 | - | - | - | | Comparative Steel |
| 23 | 0.20 | 0.15 | 0.80 | 0.010 | 0.018 | 0.06 | 0.15 | 0.36 | - | - | - | - | - | - | - | | Comparative Steel |
| 24 | 0.95 | 0.17 | 0.75 | 0.010 | 0.019 | 0.07 | 0.16 | 0.34 | - | - | - | - | - | - | - | | Comparative Steel |
| 25 | 0.51 | 0.25 | 0.78 | 0.010 | 0.019 | 0.02 | 0.13 | 0.41 | - | - | - | - | - | - | - | | Inventive Steel |
| 26 | 0.53 | 0.34 | 0.77 | 0.010 | 0.018 | 0.06 | 0.14 | 0.43 | - | - | - | - | - | - | - | | Inventive Steel |
| 27 | 0.53 | 0.24 | 0.75 | 0.010 | 0.018 | 0.06 | 0.05 | 0.43 | - | - | - | - | - | - | - | | Comp. Steel |
| 28 | 0.42 | 0.51 | 0.77 | 0.010 | 0.023 | 0.02 | 0.04 | 0.45 | - | - | - | - | 0.021 | - | 0.022 | | Comparative Steel |
| 29 | 0.44 | 0.28 | 0.87 | 0.013 | 0.014 | 0.03 | 0.15 | 0.29 | - | - | - | - | 0.011 | - | 0.016 | | Comparative Steel |
| 30 | 0.42 | 0.52 | 0.76 | 0.011 | 0.022 | 0.02 | 0.05 | 0.43 | - | - | - | - | - | - | - | | Comp. Steel |
| 31 | 0.44 | 0.29 | 0.80 | 0.013 | 0.015 | 0.03 | 0.14 | 0.30 | - | - | - | - | - | - | - | | Inventive Steel |

**Table 2-1**

| Steel Material | Steel No. | Total Reduction Rate from more than 850°C to 950°C(%) | Cooling Rate after Hot Working (°C/s) | Volume Fraction of Ferrite Structure (Vol%) | Volume Fraction of Pearlite Structure (vol%) | Thickness of Ferrite Structure (µm) | Heating Rate in Healing of Induction Quenching (°C/s) | Heating Conditions of Induction Quenching | Thickness of Hard Layer (mm) | Average Prior Austenile Grain Diameter of Hard Layer(µm) | Presence of (Fe,Mo,Mn)₂₃ (C,B)₆ before Induction Quenching | Degree of Mixed Grain Status of Hard Layer | Bending Fatigue Strength [1x10⁹] (MPa) | Total Hole Depth (mm) | Remarks |
|---|---|---|---|---|---|---|---|---|---|---|---|---|---|---|---|
| 1 | 1 | 85 | 0.4 | 64 | 36 | 15 | 600 | 890°Cx2s | 3.5 | 1.9 | No | Low | 734 | 6111 | Example |
| 2 | 1 | 85 | 0.3 | 64 | 36 | 15 | 650 | 1110°C×2s | 4.2 | 14.2 | No | Low | 495 | 6515 | Comparative Example |
| 3 | 1 | 85 | 0.5 | 64 | 36 | 15 | 600 | 890°C×10s | 4.8 | 12.9 | No | Low | 571 | 5737 | Comparative Example |
| 4 | 1 | 50 | 0.4 | 64 | 36 | 43 | 550 | 890°C×2s | 4.2 | 14.0 | No | Low | 501 | 3401 | Comparative Example |
| 5 | 2 | 85 | 0.4 | 46 | 54 | 18 | 550 | 870°Cx2s | 4.5 | 2.9 | No | Low | 704 | 6226 | Example |
| 6 | 3 | 85 | 0.4 | 59 | 41 | 17 | 550 | 880°C×2s | 3.7 | 2.7 | No | Low | 744 | 6203 | Example |
| 7 | 4 | 85 | 0.5 | 59 | 41 | 18 | 600 | 925°C×2s | 4.1 | 1.7 | No | Low | 752 | 5982 | Example |
| 8 | 5 | 85 | 0.3 | 63 | 37 | 28 | 550 | 890°C×2s | 3.2 | 13.1 | No | Low | 431 | 7102 | Comparative Example |
| 9 | 6 | 85 | 0.4 | 64 | 36 | 21 | 550 | 890°C×2s | 4.0 | 3.6 | No | Low | 688 | 6311 | Example |
| 10 | 7 | 90 | 0.4 | 42 | 58 | 26 | 550 | 910°Cx2s | 4.5 | 2.2 | No | Low | 705 | 6465 | Example |
| 11 | 8 | 85 | 0.4 | 68 | 32 | 18 | 550 | 900°C×2s | 4.1 | 2.4 | No | Low | 719 | 5958 | Example |
| 12 | 9 | 85 | 0.4 | 58 | 42 | 32 | 550 | 870°C×1s | 3.8 | 17.0 | No | Low | 467 | 7001 | Comparative Example |
| 13 | 10 | 05 | 0.5 | 0 | 0 | - | 550 | 900°C×2s | 4.5 | 1.0 | No | Low | 831 | 2557 | Comparative Example |
| 14 | 11 | 85 | 0.3 | 77 | 23 | 25 | 550 | 880°C×2s | 1.0 | 3.9 | No | Low | 481 | 8016 | Comparative Example |
| 15 | 12 | 85 | 0.4 | 0 | 2.5 | - | 550 | 880°C×2s | 4.0 | 2.4 | No | Low | 765 | 2714 | Comparative Example |
| 16 | 13 | 85 | 0.4 | 64 | 36 | 18 | 550 | 890°C×2s | 3.5 | 2.3 | No | Low | 702 | 6560 | Example |
| 17 | 13 | 85 | 0.4 | 64 | 36 | 18 | 550 | 1110°C×2s | 4.2 | 16.0 | No | Low | 482 | 6560 | Comparative Example |
| 18 | 13 | 85 | 0.4 | 64 | 36 | 18 | 550 | 890°C×10s | 4.8 | 13.5 | No | Low | 503 | 5217 | Comparative Example |
| 19 | 13 | 50 | 0.4 | 64 | 36 | 36 | 550 | 890°C×2s | 4.0 | 12.6 | No | Low | 520 | 3524 | Comparative Example |
| 20 | 14 | 85 | 0.4 | 46 | 54 | 21 | 550 | 870°C×1s | 4.5 | 3.2 | No | Low | 697 | 7450 | Example |
| 21 | 15 | 85 | 0.3 | 59 | 41 | 16 | 550 | 880°Cx2s | 3.7 | 3.1 | No | Low | 730 | 6630 | Example |
| 22 | 16 | 85 | 0.5 | 59 | 41 | 20 | 550 | 925°Cx2s | 4.1 | 1.9 | No | Low | 745 | 8350 | Example |

**Table 2-2**

| Steel Material No. | Steel No. | Total Reduction Rate from more than more than 850°C to 950°C (%) | Cooling Rate after Hot Working (°C/s) | Volume Fraction of Ferrite Structure (Vol%) | Volume Fraction of Pearlit Structure (vol%) | Thickness of Ferrite Structure (µm) | Heating Rate in Healing of Induction of Quenching (°C/s) | Heating Conditions of Induction Quenching | Thickness of Hard Layer (mm) | Average Prior Austenite Grain Diameter of Hard Layer (µm) | Presence of (Fe,Mo,Mn)₂₃ (C,B)₆ before Induction Quenching | Degree of Mixed Grain Status of Hard Layer | Bending Fatigue Strength [1×10⁸] (Mpa) | Total Hole Depth (mm) | Remarks |
|---|---|---|---|---|---|---|---|---|---|---|---|---|---|---|---|
| 23 | 17 | 65 | 0.4 | 63 | 37 | 18 | 550 | 890°C×2s | 3.8 | 3.6 | No | Low | 685 | 8650 | Example |
| 24 | 18 | 85 | 0.4 | 59 | 41 | 18 | 550 | 890°Cx2s | 4.0 | 3.7 | No | Low | 672 | 6620 | Example |
| 25 | 19 | 65 | 0.4 | 42 | 58 | 20 | 550 | 910°Cx2s | 4.5 | 2.5 | No | Low | 697 | 8420 | Example |
| 26 | 20 | 85 | 0.3 | 68 | 32 | 17 | 550 | 900°Cx2s | 4.1 | 2.6 | No | Low | 708 | 6700 | Example |
| 27 | 21 | 85 | 0.4 | 58 | 42 | 26 | 550 | 870°C×1s | 3.8 | 19.0 | No | Low | 456 | 6720 | Comparative Example |
| 28 | 22 | 85 | 0.4 | 0 | 0 | - | 550 | 900°C×2s | 4.5 | 1.0 | No | Low | 810 | 3560 | Comparative Example |
| 29 | 23 | 65 | 0.4 | 77 | 23 | 27 | 550 | 880°C×2s | 1.0 | 4.2 | No | Low | 470 | 9410 | Comparative Example |
| 30 | 24 | 65 | 0.5 | 0 | 25 | - | 550 | 880°C×2s | 4.0 | 2.5 | No | Low | 745 | 2170 | Comparative Examp |
| 31 | 25 | 85 | 0.4 | 63 | 37 | 20 | 550 | 890°Cx2s | 3.4 | 2.8 | No | Low | 695 | 6480 | Example |
| 32 | 26 | 85 | 0.4 | 65 | 35 | 18 | 550 | 890°Cx2s | 3.6 | 2.5 | No | Low | 710 | 6720 | Example |
| 33 | 27 | 85 | 0.4 | 65 | 35 | 19 | 550 | 890°C×2s | 2.5 | 2.2 | No | Low | 700 | 6750 | Comp. Ex. |
| 34 | 28 | 85 | 0.4 | 0 | 0 | - | 550 | 890°C×2s | 4.0 | 2.5 | Yes | High | 735 | 2620 | Comparative Example |
| 35 | 29 | 85 | 0.4 | 0 | 0 | - | 550 | 890°C×2s | 4.0 | 2.3 | Yes | High | 751 | 2819 | Comparative Example |
| 36 | 30 | 85 | 0.4 | 50 | 50 | 16 | 550 | 890°Cx2s | 4.0 | 2.5 | No | Low | 765 | 6430 | Comp. Ex. |
| 37 | 31 | 85 | 0.4 | 50 | | 16 | 550 | 890°Cx2s | 4.0 | 2.5 | No | Low | 782 | 6320 | Example |
| 38 | 1 | 65 | 0.4 | 63 | 37 | 15 | 800 | 890°Cx2s | 3.5 | 1.8 | No | Low | 745 | 6120 | Example |
| 39 | 1 | 85 | 0.4 | 62 | 38 | 14 | 350 | 890°Cx2s | 3.5 | 2.0 | No | Low | 731 | 6070 | Example |
| 40 | 1 | 85 | 0.4 | 65 | 35 | 14 | 150 | 890°Cx2s | 3.5 | 2.4 | No | Low | 715 | 6140 | Example |
| 41 | 1 | 85 | 0.4 | 63 | 37 | 13 | 150 | 1050°C×2s | 3.4 | 13.5 | No | Low | 567 | 6130 | Comparative Example |
| 42 | 1 | 85 | 0.4 | 62 | 38 | 13 | 150 | 1010°C×2s | 3.4 | 12.8 | No | Low | 585 | 6120 | Comparative Example |
| 43 | 1 | 85 | 0.4 | 64 | 36 | 15 | 150 | 980°Cx2s | 3.5 | 11.1 | No | Low | 605 | 6150 | Example |

## Claims

1. A steel material for induction quenching comprising:
0.3% to 0.7% of C, 1.1% or less of Si, 0.2% to 1.1% of Mn, 0.05% to 0.6% of Mo, 0.06% or less of S, 0.025% or less of P, 0.25% or less of Al, 0.1% to less than 0.3% of Cr on a mass basis;
and optionally comprising at least one of 1.0% or less of Cu, 3.5% or less of Ni, 1.0% or less of Co, 0.1% or less of Nb, 0.1% or less of Ti, and 0.5% or less of V on a mass basis;
and optionally further comprising at least one of 0.005% or less of Ca, 0.005% or less of Mg, 0.005% or less of Te, 0.5% or less of Bi, 0.5% or less of Pb, and 0.01% or less of Zr on a mass basis;
and the balance being Fe and unavoidable impurities including oxygen, nitrogen and boron, the latter's content being 0.0003% or less by mass, wherein the steel material comprises a ferrite structure whose maximum thickness is 30 µm or less and a pearlite structure, the total volume fraction of the ferrite structure and the pearlite structure being 90% or more.

2. An induction quenched steel obtainable by induction quenching a steel material as defined in Claim 1, the induction quenching forming a hard layer having a thickness of 2 mm or more in which the average prior austenite grain diameter is 12 µm or less, the hard layer being that region of the induction quenched steel from its surface, where the steel has a 100% martensite structure on an area fraction basis, to a depth at which the area fraction of the martensite structure is decreased to 98%.

3. A method for manufacturing a steel material for induction quenching comprising the steps of:
hot working steel at a total reduction rate of 80% or more in a temperature region of more than 850°C to 950°C, the steel comprising 0.3% to 0.7% of C, 1.1% or less of Si, 0.2% to 1.1% of Mn, 0.05% to 0.6% of Mo, 0.06% or less of S, 0.025% or less of P, 0.25% or less of Al, 0.1% to less than 0.3% of Cr on a mass basis;
and optionally comprising at least one of 1.0% or less of Cu, 3.5% or less of Ni, 1.0% or less of Co, 0.1% or less of Nb, 0.1% or less of Ti, and 0.5% or less of V on a mass basis;
and optionally further comprising at least one of 0.005% or less of Ca, 0.005% or less of Mg, 0.005% or less of Te, 0.5% or less of Bi, 0.5% or less of Pb and 0.01% or less of Zr on a mass basis;
and the balance being Fe and unavoidable impurities including oxygen, nitrogen and boron, the latter's content being 0.0003% or less by mass, and
cooling the steel treated by the hot working to 600°C or less at a cooling rate of less than 0.6°C/sec.

4. A method for manufacturing an induction quenched member comprising the steps of:
forming a steel material as defined in Claim 1 into a predetermined shape, and
induction quenching the shaped steel material in a heating temperature region of 800°C to 1,000°C for 5 seconds or less.

## Patentansprüche

1. Stahl-Material zum Induktionshärten (induction quenching), umfassend:
0,3 bis 0,7 % C, 1,1 % oder weniger Si, 0,2 bis 1,1 % Mn, 0,05 bis 0,6 % Mo, 0,06 % oder weniger S, 0,025 % oder weniger P, 0,25 % oder weniger Al, 0,1 % bis weniger als 0,3 % Cr auf Basis der Masse;
und optional umfassend mindestens eines aus 1,0 % oder weniger Cu, 3,5 % oder weniger Ni, 1,0 % oder weniger Co, 0,1 % oder weniger Nb, 0,1 % oder weniger Ti und 0,5 % oder weniger V auf Basis der Masse;
und optional weiterhin umfassend mindestens eines aus 0,005 % oder weniger Ca, 0,005 % oder weniger Mg, 0,005 % oder weniger Te, 0,5 % oder weniger Bi, 0,5 % oder weniger Pb und 0,01 % oder weniger Zr auf Basis der Masse;
und als Restbetrag Fe und unvermeidbare Verunreinigungen einschließlich Sauerstoff, Stickstoff und Bor, letzteres in einem Gehalt von 0,0003 Massen% oder weniger, worin das Stahl-Material eine Ferrit-Struktur umfasst, deren maximale Dicke 30 µm oder weniger ist, und eine Perlit-Struktur, wobei der gesamte Volumen-Anteil der Ferrit-Struktur und der Perlit-Struktur 90 % oder mehr ist.

2. Induktions-gehärteter Stahl, erhältlich durch Induktionshärten des Stahl-Materials gemäß Anspruch 1, wobei durch das Induktionshärten eine harte Schicht mit einer Dicke von 2 mm oder mehr gebildet wird, in der der mittlere Korndurchmesser des primären Austenits (prior austenite) 12 µm oder weniger ist, wobei die harte Schicht der Bereich des Induktions-gehärteten Stahls von seiner Oberfläche, wo der Stahl 100 % Martensit-Struktur auf Basis des Flächenanteils hat, bis zu einer Tiefe, bei der der Flächenanteil der Martensit-Struktur auf 98 % abgenommen hat, ist.

3. Verfahren zur Herstellung eines Stahl-Materials zur Induktionshärtung, das die folgenden Schritte umfasst:
Warmumformung (hot working) von Stahl bei einer gesamten Reduktionsrate von 80% oder mehr in einem Temperaturbereich von mehr als 850°C bis 950°C, wobei der Stahl 0,3 bis 0,7 % C, 1,1 % oder weniger Si, 0,2 bis 1,1 % Mn, 0,05 bis 0,6 % Mo, 0,06 % oder weniger S, 0,025 % oder weniger P, 0,25 % oder weniger Al, 0,1 % bis weniger als 0,3 % Cr auf Basis der Masse umfasst;
und optional mindestens eines aus 1,0 % oder weniger Cu, 3,5 % oder weniger Ni, 1,0 % oder weniger Co, 0,1 % oder weniger Nb, 0,1 % oder weniger Ti und 0,5 % oder weniger V auf Basis der Masse umfasst;
und optional weiterhin mindestens eines aus 0,005 % oder weniger Ca, 0,005 % oder weniger Mg, 0,005 % oder weniger Te, 0,5 % oder weniger Bi, 0,5 % oder weniger Pb und 0,01 % oder weniger Zr auf Basis der Masse umfasst;
wobei der Restbetrag Fe und unvermeidbare Verunreinigungen einschließlich Sauerstoff, Stickstoff und Bor ist, letzteres in einem Gehalt von 0,0003 Massen% oder weniger,
und Kühlen des durch Wärmeumformung behandelten Stahls auf 600°C oder weniger bei einer Abkühlrate von weniger als 0,6°C/Sekunde.

4. Verfahren zur Herstellung eines Induktions-gehärteten Teiles, das die Schritte umfasst:
Formen eines Stahl-Materials gemäß Anspruch 1 in eine vorherbestimmte Form, und
Induktionshärten des geformten Stahl-Materials in einem Heiztemperaturbereich von 800°C bis 1.000°C für 5 Sekunden oder weniger.

## Revendications

1. Matériau en acier destiné à une trempe par induction comprenant :
0,3% à 0,7% de C, 1,1% ou moins de Si, 0,2% à 1,1% de Mn, 0,05% à 0,6% de Mo, 0,06 ou moins de S, 0,025% ou moins de P, 0,25% ou moins de Al, 0,1% à moins de 0,3% de Cr sur une base massique ;
et comprenant facultativement au moins l'un parmi 1,0% ou moins de Cu, 3,5% ou moins de Ni, 1,0% ou moins de Co, 0,1% ou moins de Nb, 0,1% ou moins de Ti et 0,5% ou moins de V sur une base massique ;
et comprenant en outre facultativement au moins l'un parmi 0,005% ou moins de Ca, 0,005% ou moins de Mg, 0,005% ou moins de Te, 0,5% ou moins de Bi, 0,5% ou moins de Pb et 0,01% ou moins de Zr sur une base massique ;
et le reste étant du Fe et des impuretés inévitables y compris de l'oxygène, de l'azote et du bore, la teneur de ce dernier étant de 0,0003% ou moins en masse, dans lequel le matériau en acier comprend une structure de ferrite dont l'épaisseur maximale est de 30 µm ou moins et une structure de perlite, la fraction volumique totale de la structure de ferrite et de la structure de perlite étant de 90% ou plus.

2. Acier trempé par induction que l'on peut obtenir par trempe par induction d'un matériau en acier tel que défini dans la revendication 1, la trempe par induction formant une couche dure ayant une épaisseur de 2 mm ou plus dans laquelle le diamètre moyen de grains d'austénite primaire est de 12 µm ou moins, la couche dure étant la région de l'acier trempé par induction à partir de sa surface, où l'acier a une structure de martensite de 100% sur une base de fraction de surface, jusqu'à une profondeur à laquelle la fraction de surface de la structure de martensite diminue à 98%.

3. Procédé de fabrication d'un matériau en acier pour trempe par induction comprenant les étapes qui consistent à :
traiter à chaud un acier à un taux de réduction total de 80% ou plus dans une région de température de plus de 850°C à 950°C, l'acier comprenant 0,3% à 0,7% de C, 1,1% ou moins de Si, 0,2% à 1,1% de Mn, 0,05% à 0,6% de Mo, 0,06% ou moins de S, 0,025% ou moins de P, 0,25% ou moins de Al, 0,1% à moins de 0,3% de Cr sur une base massique ;
et comprenant facultativement au moins l'un parmi 1,0% ou moins de Cu, 3,5% ou moins de Ni, 1,0% ou moins de Co, 0,1% ou moins de Nb, 0,1% ou moins de Ti et 0,5% ou moins de V sur une base massique ;
et comprenant en outre facultativement au moins l'un parmi 0,005% ou moins de Ca, 0,005% ou moins de Mg, 0,005% ou moins de Te, 0,5% ou moins de Bi, 0,5% ou moins de Pb et 0,01% ou moins de Zr sur une base massique ;
et le reste étant du Fe et des impuretés inévitables y compris de l'oxygène, de l'azote et du bore, la teneur de ce dernier étant de 0,0003% ou moins en masse, et
refroidir l'acier traité par le traitement à chaud à 600°C ou moins à une vitesse de refroidissement de moins de 0,6°C/sec.

4. Procédé de fabrication d'un élément trempé par induction comprenant les étapes qui consistent à :
former un matériau en acier tel que défini dans la revendication 1 sous une forme prédéterminée, et
tremper par induction le matériau en acier mis en forme dans une région de température de chauffage de 800°C à 1,000°C pendant 5 secondes ou moins.
